**Europäisches Patentamt**

**European Patent Office**

**Office européen des brevets**

(11) Veröffentlichungsnummer: **0 346 473**
A1

(12)
# EUROPÄISCHE PATENTANMELDUNG
Veröffentlicht nach Art. 158 Abs. 3 EPÜ

(21) Anmeldenummer: **88904711.4**

(22) Anmeldetag: **29.02.88**

Daten der zugrundeliegenden internationalen Anmeldung:

(86) Internationale Anmeldenummer:
**PCT/SU88/00048**

(87) Internationale Veröffentlichungsnummer:
**WO89/05451 (15.06.89 89/13)**

(51) Int. Cl.³: **G 01 N 29/04**

(30) Priorität: **10.12.87 SU 4336106**

(43) Veröffentlichungstag der Anmeldung:
**20.12.89 Patentblatt 89/51**

(84) Benannte Vertragsstaaten:
**DE FR GB IT SE**

(71) Anmelder: **MOSKOVSKOE VYSSHEE TEKHNICHESKOE UCHILISCHE IMENI N.E.BAUMANA**
ul. 2-ya Baumanskaya, 5
Moscow, 107005(SU)

(72) Erfinder: **ALESHIN, Nikolai Pavlovich**
ul. 15 Parkovaya, 18-1-109
Moscow, 105077(SU)

(72) Erfinder: **BARANOV, Vladimir Jurievich**
Schelkovskoe shosse, 58-2-17
Moscow, 105215(SU)

(72) Erfinder: **DOLGOV, Vyacheslav Mikhailovich**
ul. Pushkinskaya, 6-18 Moskovskaya obl.
Scherbinka, 142002(SU)

(72) Erfinder: **YAROVOI, Alexandr Alexeevich**
pr. Mira, 25-48
Nikolaev, 327056(SU)

(72) Erfinder: **PREOBRAZHENSKY, Oleg Alexandrovich**
ul. Muranovskaya, 13b-183
Moscow, 127349(SU)

(74) Vertreter: **Patentanwälte Zellentin & Partner**
Zweibrückenstrasse 15
D-8000 München 2(DE)

(54) **ABTASTANORDNUNG FÜR DIE ULTRASCHALL-KONTROLLE VON GEGENSTÄNDEN.**

(57) Die zur Ultraschallkontrolle von Erzeugnissen bestimmte Abtasteinrichtung enthält eine Aufhängevorrichtung (7) für die Aufhängung von Ultraschallwandlern auf einem Triebwerk (6) der Abtasteinrichtung. Die Aufhängevorrichtung (7) enthält ihrerseits biegsame Elemente (8), die über der Oberfläche (4) des zu kontrollierenden Erzeugnisses (2) angeordnet werden und mit ihnen fest verbundene Ultraschallwandler (1) tragen, welche in Gehäusen (3) eingeschlossen sind, sowie einen Balken (9), der über den biegsamen Elementen (8) liegt und mit diesen mechanisch verbunden ist, und außerdem zwei sich selbsteinstellende Stützen (10), die aus zwei Teilen bestehen, und zwar aus einem ringteilförmigen Element (16) und aus Rollen (17), wobei diese Teile in bezug aufeinander so angeordnet sind, daß ihre gemeinsame Verschiebung bezüglich einer für die Stützen (10) gemeinsamen und auf der Oberfläche (4) des Erzeugnisses (2) liegenden Schwingungsachse (15) erfolgt.

Zur Aufhängevorrichtung (7) gehören auch zwei Schwengel (11), die mit dem Balken (9) und dem Triebwerk (6) kinematisch verbunden sind.

FIG.3

Croydon Printing Company Ltd.

# ABTASTEINRICHTUNG ZUR ULTRASCHALLKONTROLLE VON ERZEUGNISSEN

## Gebiet der Technik

Die Erfindung bezieht sich auf Einrichtungen zur zerstörungsfreien Prüfung von Erzeugnissen, insbesondere auf Abtasteinrichtungen zur Ultraschallkontrolle von Erzeugnissen.

## Stand der Technik

Eine bekannte Einrichtung zur Ultraschallkontrolle enthält Ultraschallwandler, die mittels einer Aufhängevorrichtung auf einem Wagen befestigt sind, dessen Stützrollen die Oberfläche des zu prüfenden Erzeugnisses berühren (SU, A, 555333).

In dieser Einrichtung wird eine stabile Lage der Ultraschallwandler in bezug auf die Oberfläche des zu prüfenden Erzeugnisses nicht erreicht, da kinematische Verbindungselemente fehlen, die eine sichere Orientierung der Ultraschallwandler während ihrer Bewegung auf der Oberfläche des Erzeugnisses ermöglichen. Die feste Verbindung der Aufhängevorrichtung der Ultraschallwandler mit dem Wagen gibt diesen Wandlern keine Möglichkeit Hindernisse, wie z.B. Schweißnahtraupen, Metallspritzer nach der Schweißung, zu überwinden, da ein Kippmoment entstehen kann, das zur Beschädigung der Aufhängevorrichtung führt.

Außerdem ist diese Einrichtung durch niedrige Zuverlässigkeit und Sicherheit der Kontrolle von Erzeugnissen mit ebener und krummliniger Oberfläche bei verschiedener räumlicher Lage der Einrichtung gekennzeichnet.

Bekannt ist auch eine Abtasteinrichtung zur Ultraschallkontrolle von Erzeugnissen, bei der die Ultraschallwandler auf das zu kontrollierende Erzeugnis angelegt und an seine Oberfläche mit Hilfe einer Andrückvorrichtung gedrückt werden, wobei die Ultraschallwandler auf einem Triebwerk mit Hilfe einer Aufhängevorrichtung befestigt sind (SU, A, 1128161).

Bei dieser Abtasteinrichtung enthält die zum Aufhängen der Ultraschallwandler auf dem Triebwerk bestimmte Vorrichtung Wagen, die an den mit dem Triebwerk fest verbundenen Pantografen gelenkig befestigt sind.

Das gelenkige Parallelogramm jedes Pantografen ist mittels einer Feder abgefedert und dient als Aufhängevorrichtung für die Ultraschallwandler.

Eine derartige Ausführung der Aufhängevorrichtung ist konstruktiv kompliziert und weist große Abmessungen sowie ein großes Gewicht auf. Dies gestattet es nicht, Erzeugnisse mit ebener und krummer Oberfläche bei verschiedener räumlicher Lage der Abtasteinrichtung zu kontrollieren und führt zu niedriger Zuverlässigkeit und Glaubwürdigkeit der Kontrolle von Erzeugnissen, die sowohl aus ferromagnetischen als auch aus nichtferromagnetischen Werkstoffen gefertigt sind.

Außerdem ist bei solcher Ausführung der Aufhängevorrichtung die Überwindung von Hindernissen in Form von Metallspritzern nach dem Schweißen oder Schweissnahtraupen unmöglich, da beim Auffahren des Wagens mit den Ultraschallwandlern auf Hindernisse ein Kippmoment entsteht, weil die Achsen der die Wagen mit den Pantografen verbindenden Gelenke hoch über der Oberfläche des zu kontrollierenden Erzeugnisses liegen.

Offenbarung der Erfindung

Der Erfindung liegt die Aufgabe zugrunde, eine Abtasteinrichtung zur Ultraschallkontrolle von Erzeugnissen zu entwickeln, bei der die konstruktiv vereinfachte Ausführung der zum Aufhängen der Ultraschallwandler auf dem Triebwerk der Abtasteinrichtung bestimmten Aufhängevorrichtung die zuverlässige und wahrheitsgetreue Ultraschallkontrolle einer erweiterten Klasse von sowohl aus ferromagnetischen als auch aus nichtferromagnetischen Werkstoffen hergestellten zu kontrollierenden Erzeugnissen mit ebener und krummer Oberfläche bei verschiedener räumlicher Lage der Abtasteinrichtung ermöglicht und die kleinere Abmessungen sowie ein geringeres Gewicht aufweist.

Dies wird dadurch erreicht, daß in der Abtasteinrichtung zur Ultraschallkontrolle von Erzeugnissen mit Ultraschallwandlern, die am Triebwerk der Abtasteinrichtung mittels einer Aufhängevorrichtung befestigt sind, an das zu kontrollierende Erzeugnis angelegt und an seine Oberfläche mittels einer Andrückvorrichtung gedrückt werden, erfindungsgemäß die Aufhängevorrichtung für die Aufhängung der Ultraschallwandler auf dem Triebwerk der Abtasteinrichtung biegsame Elemente enthält, die über der Oberfläche des zu kontrollierenden Erzeugnisses längs der vom Triebwerk festgelegten Bewegungsrichtung der Einrichtung angeordnet sind und darauf befestigte Ultraschallwandler tragen, sowie einen Balken aufweist, der über den biegsamen Elementen längs der Bewegungsrichtung der Einrichtung liegt und mit den biegsamen Elementen mechanisch verbunden ist, und wenigstens zwei sich selbsteinstellende Stützen besitzt, bei denen ein Teil am Balken und der andere Teil in bezug auf den ersten Teil so angeordnet ist, daß die gemeinsame Verschiebung der beiden Teile in bezug auf die für die selbsteinstellenden Stützen gemeinsame und unmittelbar in der Nähe des zu kontrollierenden Erzeugnisses liegende Schwingungsachse erfolgt, sowie mit Schwengeln versehen ist, die mit dem Balken und dem Triebwerk mechanisch verbunden sind.

Es ist vorteilhaft, einen Teil jeder selbsteinstellenden Stütze in Form eines an einem Ende des Balkens befestigten ringteilförmigen Elementes auszuführen, dessen Längsachse als gemeinsame Schwingungsachse für beide sich selbsteinstellenden Stützen dient und das an einem der Ende des Balkens angebracht ist, und den anderen Teil aus wenigstens drei Rollen aufzubauen, die auf einer gemeinsamen Stützplatte befestigt sind und mit den Arbeitsflächen des ringförmigen Elements in Berührung stehen, wobei sie über das ringförmige Element und die Stützplatte einen der Schwengel mit dem Balken kinematisch verbinden.

Zweckentsprechend kann ein Teil jeder sich selbsteinstellenden Stütze in Form einer mit dem Balken fest verbundenen Führungsschiene mit zwei zylindrischen Arbeitsflächen und einer diese verbindenden ebenen Arbeitsfläche ausgeführt sein, und der andere Teil kann als ein mit den biegsamen Elementen mechanisch verbundener Einsatz mit zwei zylindrischen Arbeitsflächen und einer diese verbindenden ebenen Arbeitsfläche gefertigt werden, wobei die zweitgenannten zylindrischen Arbeitsflächen mit den erstgenannten zylindrischen Arbeitsflächen entsprechenderweise kongruent sein und sie berühren sollen, während die Längsachsen aller zylindrischen Arbeitsflächen koinzidieren und als gemeinsame Schwingungsachse für die beiden sich/selbsteinstellenden Stützen dienen sollen.

Zwecks Kontrolle von Erzeugnissen aus ferromagnetischen Werkstoffen ist es wünschenswert, die Andrückvorrichtung zum Andrücken der Ultraschallwandler an die Oberfläche des zu kontrollierenden Erzeugnisses mit Hauptpermanentmagneten zu versehen, die unmittelbar über den entsprechenden, auf den biegsamen Elementen befestigten Ultraschallwandlern eingebaut sind.

Für den Fall der Kontrolle von Erzeugnissen aus nichtferromagnetischen Werkstoffen kann die Vorrichtung zum Andrücken der Ultraschallwandler an die Oberfläche des zu kontrollierenden Erzeugnisses eine Plattform enthalten, die im Bereich der zur /Kontrolloberfläche entgegengesetzt liegenden Fläche des zu kontrollierenden Erzeugnisses angeordnet und für die automatische Wiederholung der Bewegungsbahn der Abtasteinrichtung hergerichtet ist, sowie zusätzliche Permanentmagnete besitzen, die auf der Plattform mit den zu den Polen der Hauptpermanentmagnete ungleichnamigen Polen symmetrisch zu den Hauptpermanentmagneten angeordnet sind.

Bei solcher konstruktiven Ausführung der zum Patent angemeldeten Abtasteinrichtung zur Ultraschallkontrolle von Erzeugnissen wird eine zuverlässige und glaubwürdige Kontrolle der Erzeugnisse gewährleistet und ergeben es sich kleinere Abmessungen, ein geringeres Gewicht der Einrichtung im Ganzen sowie eine bedeutende Vereinfachung ihrer Konstruktion.

Die erfindungsgemäß ausgeführte Einrichtung gestattet es außerdem, die Klasse der zu kontrollierenden Erzeugnisse sowohl aus ferromagnetischen als auch aus nichtferromagnetischen Werkstoffen mit ebener und krummer Oberfläche zu erweitern und die Kontrolle bei verschiedener räumlicher Lage der Einrichtung durchzuführen.

Die feste Verbindung der Ultraschallwandler mit den biegsamen Elementen ermöglicht die Überwindung von Hindernissen auf der Oberfläche des zu kontrollierenden Erzeugnisses in der Art von Metallspritzern nach dem Schweißen oder Schweißnahtraupen unabhängig von der Krümmung der Erzeugnisoberfläche.

Die kleineren Abmessungen und ein geringeres Gewicht der erfindungsgemäßen Abtasteinrichtung ermöglichen ihre Bedienung durch eine Person.

Die Permanentmagnete der Andrückvorrichtung dieser Einrichtung gestatten die Anwendung einer ferromagnetischen Flüssigkeit, um einen stabilen akustischen Kontakt der Ultraschallwandler mit der Oberfläche des zu kontrollierenden Erzeugnissen zu erreichen.

Beschreibung

Die Erfindung wird in der nachstehenden Beschreibung von konkreten Varianten ihrer Ausführung und anhand von Zeichnungen näher erläutert. Hierbei zeigen

Fig. 1 eine auf dem zu kontrollierenden Erzeugnis angeordnete Abtasteinrichtung zur Ultraschallkontrolle von Erzeugnissen gemäß der Erfindung (Seitenansicht mit Teilschnitt, Erzeugnis im Querschnitt);

Fig. 2 dasselbe wie in Fig. 1 (Draufsicht mit Ausschnitt);

Fig. 3 ein kinematisches Schema der Einrichtung nach Fig. 1;

Fig. 4 einen Schnitt in Richtung der Linie IV-IV in Fig. 2 (in vergrößertem Maßstab);

Fig. 5 einen Schnitt in Richtung der Linie V-V in Fig. 2;

Fig. 6 einen Schnitt in Richtung der Linie VI-VI in Fig. 5 (in vergrößertem Maßstab);

Fig. 7 eine andere Ausführungsform der Abtasteinrichtung gemäß der Erfindung (Seitenansicht mit Ausschnitt, Erzeugnis im Querschnitt);

Fig. 8 einen Schnitt in Richtung der Linie VIII--VIII in Fig. 7 in vergrößertem Maßstab;

Fig. 9 dasselbe wie in Fig. 7, Ansicht in Richtung des Pfeiles A;

Fig. 10 eine weitere Ausführungsvariante der Abtasteinrichtung gemäß der Erfindung (Seitenansicht teilweise geschnitten, Erzeugnis im Querschnitt);

Fig. 11 dasselbe wie in Fig. 10 (Draufsicht mit Ausschnitt);

Fig. 12 ein kinematisches Schema der Einrichtung nach Fig. 10;

Fig. 13 Schnitt in Richtung der Linie XIII-XIII in Fig. 10;

Fig. 14 Schnitt in Richtung der Linie XIV-XIV in Fig. 11 in vergrößertem Maßstab;

Fig. 15 eine Seitenansicht der nach Fig. 1 erfindungsgemäß ausgeführten Abtasteinrichtung auf einem Untersatz mit Testmuster im Querschnitt (die Einrichtung ist in verkleinertem Maßstab dargestellt).

Bevorzugte Ausführungsformen der Erfindung

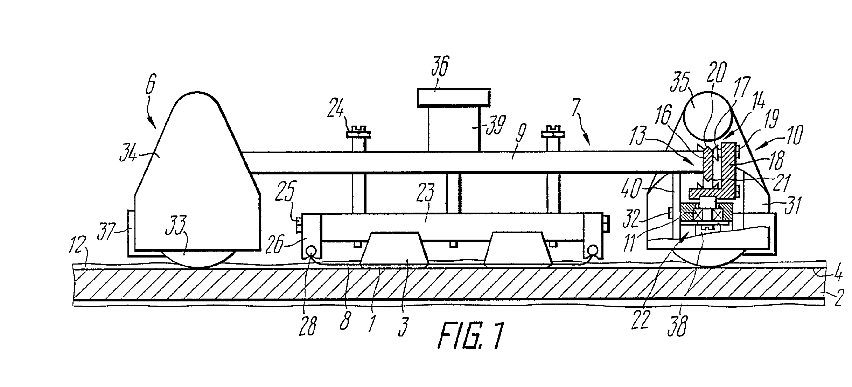

Eine erfindungsgemäß ausgeführte Abtasteinrichtung zur Ultraschallkontrolle von Erzeugnissen enthält Ultraschallwandler 1 (Fig. 1), die auf dem zu kontrollierenden Erzeugnis 2 angeordnet werden. Bei dieser Ausführungsform der erfindungsgemäßen Einrichtung befinden sich die Ultraschallwandler 1 in Gehäusen 3 (Fig. 1 bis 3).

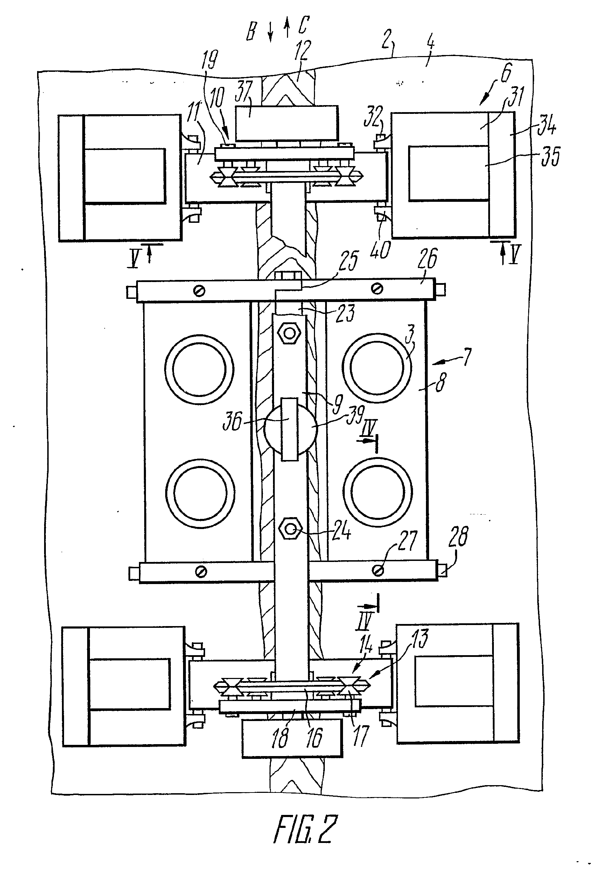

Die Ultraschallwandler 1 (Fig. 4) werden an die Oberfläche 4 des zu kontrollierenden Erzeugnisses 2 mit Hilfe einer Andrückvorrichtung 5 gedrückt und sind an einem Triebwerk 6 (Fig. 1 bis 3) mittels einer Aufhängevorrichtung 7 befestigt.

Die Aufhängevorrichtung 7 enthält biegsame Elemente 8, einen Balken 9. zwei sich selbsteinstellende Stützen 10 und zwei Schwengel 11.

Die biegsamen Elemente 8, gegebenenfalls zwei Metallbänder, werden über der Oberfläche 4 des zu kontrollierenden Erzeugnisses 2 längs der vom Triebwerk 6 vorgegebenen Bewegungsrichtung der Einrichtung angeordnet. In diesem Falle erfolgt die Bewegung in Richtung der Pfeile B (Fig. 2) und C längs der Schweißnaht 12 am Erzeugnis 2. Die biegsamen Elemente 8 liegen beiderseits der Schweißnaht 12. Auf den biegsamen Elementen 8 (Fig. 1 und 4) sind die Ultraschallwandler 1 starr befestigt.

Über den biegsamen Elementen 8 (Fig. 2) liegt längs der Bewegungsrichtung der erfindungsgemäßen Einrichtung der Balken 9, der mit den biegsamen Elementen 8 mechanisch verbunden ist.

Die sich selbsteinstellenden Stützen 10 (Fig. 5) bestehen aus zwei Teilen, von denen ein Teil 13 auf dem Balken 9 angeordnet ist und der andere Teil 14 in bezug auf den erstgenannten Teil 13 so liegt, daß die gemeinsame Verschiebung der beiden Teile 13 und 14 in bezug auf die für die sich selbsteinstellenden Stützen 10 gemeinsame und unmittelbar in der Nähe der Oberfläche 4 des zu kontrollierenden Erzeugnisses 2 liegende Schwingungsachse 15 erfolgt. In der vorliegenden Ausführungsform liegt die Schwingungsachse 15 unmittelbar auf der Oberfläche 4 des Erzeugnisses 2 und es werden nur zwei sich selbsteinstellende Stützen 10 benutzt.

- 8 -

Je nach der Anzahl der Ultraschallwandler können aber drei und mehr selbsteinstellende Stützen benutzt werden.

Die Schwengel 11 (Fig. 1 und 2) sind mit dem Balken 9 und dem Triebwerk 6 kinematisch verbunden.

In der zu behandelnden Ausführungsform der erfindungsgemäßen Abtasteinrichtung ist der eine Teil 13 (Fig. 5) jeder selbsteinstellenden Stütze 10 als ringteilförmiges Element 16 geformt, dessen Längsachse die gemeinsame Schwingungsachse 15 der beiden an den Enden des Balkens 9 angeordneten Stützen bildet, wie dies aus Fig. 2 zu ersehen ist.

Der andere Teil 14 (Fig.6) jeder Stütze 10 ist in der Art von vier an einer für sie gemeinsamen Stützplatte 18 mittels der Schrauben 19 befestigten Rollen 17 ausgeführt, die mit den Arbeitsflächen 20 (Fig. 3, 5) und 21 des ringförmigen Elements 16 in Berührung sind und den Balken 9 über das ringförmige Element 16, die Stützplatte 18 und ein Gelenk 22 mit dem Schwengel 11 kinematisch verbinden.

Man kann auch drei und mehr als vier Rollen benutzen. Dies ist von der Belastung abhängig, welcher die Rollen bei der Bewegung der Einrichtung auf dem zu kontrollierenden Erzeugnis ausgesetzt sind.

Die mechanische Verbindung des Balkens 9 (Fig. 1 bis 3) mit den biegsamen Elementen 8 ist mit Hilfe einer Stange 23 realisiert, die am Balken 9 mittels Schraubenpaaren 24 (Fig. 1 und 2) befestigt ist. Mit den Enden der Stange 23 sind mit Hilfe eines Gelenks 25 Halter 26 verbunden, in denen mittels einer Feststellschraube 27 und eines Spannelements 28 zum Anziehen der biegsamen Elemente 8 (Fig. 4) die Enden dieser Elemente 8 befestigt sind.

Jedes Gehäuse 3 der Ultraschallwandler 1 hat einen Abdichtungsdeckel 29 und einen Hohlraum 30 für eine ferromagnetische Flüssigkeit, deren Benutzung für die Bildung eines stabilen akustischen Kontaktes zwischen den Ultraschallwandlern 1 und der Oberfläche 4 des zu kontrollierenden Erzeugnisses 2 zweckmäßig ist.

Das Triebwerk 6 (Fig. 2) der Abtasteinrichtung enthält erfindungsgemäß vier Gehäuse 31, die mit den Enden der Schwengel 11 mit Hilfe von Achsen 32 gelenkig verbunden sind. In jedem Gehäuse 31 (Fig. 1) befindet sich ein Magnetrad 33, das an der Ausgangswelle eines mit dem Gehäuse 31 fest verbundenen Untersetzungsgetriebes 34 befestigt ist. Ein Elektromotor 35 (Fig. 2) ist an jedem Untersetzungsgetriebe 34 angebaut, wobei die Ausgangswelle des Elektromotors 35 mit der ersten Stufe des Untersetzungsgetriebes 34 im Eingriff steht.

Das Triebwerk 6 der Einrichtung kann aber auch zwei Elektromotoren und Untersetzungsgetriebe enthalten, die mit dem in der Bewegungsrichtung der Einrichtung ersten Schwengel kinematisch verbunden sind. Dies hängt von der räumlichen Lage der Einrichtung bei ihrer Bewegung auf der Oberfläche des zu kontrollierenden Erzeugnisses ab, z.B. bei der Kontrolle von Vertikalschweißnähten.

Die erfindungsgemäß ausgeführte Einrichtung enthält einen am Balken 9 angeordneten Signalgeber 36 (Fig. 1 und 2) zur Erzeugung von Signalen beim Beginn und beim Ende der Kontrolle, sowie Geber 37 für die Schweißnahtverfolgung, die an den Stützplatten 18 angeordnet sind und Signale erzeugen, welche der Abweichung der Einrichtung von der Schweißnaht 12 während ihrer Bewegung proportional sind, und außerdem an den Gelenken 22 befestigte Drehwinkelgeber 38 (Fig. 5) zur Bestimmung des Drehwinkels der Schwengel 11 in bezug auf die Stützplatten 18 sowie einen in der Zeichnung nicht gezeigten und zum Erfindungsgegenstand nicht gehörenden Entfernungsgeber zur Erfassung der von der erfindungsgemäßen Einrichtung zurückgelegten Entfernung.

Auf dem Balken 9 (Fig. 2) ist ein Defektmarkierer 39 befestigt, der auf die Oberfläche des Erzeugnisses Marken z.B. mit Farbe zur Bezeichnung von vorhandenen Defekten in dem zu kontrollierenden Erzeugnis 2 nach den Ergebnissen der Ultraschallkontrolle bei der Bewegung der Einrichtung aufträgt.

An den Gehäusen 31 (Fig. 5) sind Ösen 40 mit Öffnungen 41 vorgesehen, die für die Einstellung der Aufhängevorrichtung 7 vor Beginn der Kontrolle bestimmt sind.

Wenn mit der erfindungsgemäß ausgeführten Abtasteinrichtung Erzeugnisse 2 (Fig. 4) aus ferromagnetischen Werkstoffen, z.B. aus Stahl, kontrolliert werden, enthält die zum Andrücken der Ultraschallwandler 1 an die Oberfläche 4 des zu kontrollierenden Erzeugnisses 2 bestimmte Andrückvorrichtung 5 Permanentmagnete 42 (Pole S, N), die über den entsprechenden Ultraschallwandlern 1 angeordnet und auf den biegsamen Elementen 8 befestigt sind.

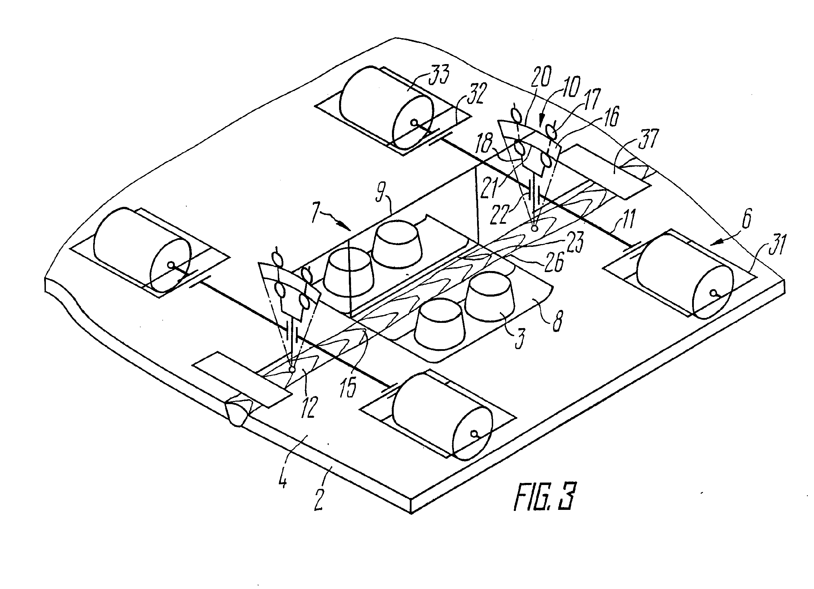

Für die Kontrolle von Erzeugnissen 43 (Fig. 7) aus nichtferromagnetischen Werkstoffen, z.B. aus Aluminium, wird die Abtasteinrichtung gemäß der Erfindung nach Fig. 1 bis 6 ausgeführt.

Im Unterschied zu dieser Einrichtung enthält die Andrückvorrichtung 5 (Fig. 7 und 8) eine Plattform 44 enthält, die an der Oberfläche 45 des Erzeugnisses 43 an der Seite angeordnet wird, welche der Oberfläche 46 des Erzeugnisses 43, an der die Kontrolle erfolgt, entgegengesetzt ist. Die Krümmung der Oberfläche 47 der Plattform 44 entspricht der Krümmung der Oberfläche 45, wobei die Plattform 44 für die automatische Wiederholung der Bewegungsbahn der erfindungsgemäßen Abtasteinrichtung geeignet ist. Die Andrückvorrichtung 5 enthält auch Permanentmagnete 48 (Pole S, N), die auf der Plattform 44 mit den zu den Polen N der Permanentmagnete 42 ungleichnamigen Polen und symmetrisch zu den letzteren angeordnet sind.

Die automatische Wiederholung der Bewegungsbahn der Abtasteinrichtung durch die Plattform 44 wird mit Hilfe der magnetischen Kopplung der Räder 33 (Fig. 7) des Triebwerks 6 und der Permanentmagnete 42 mit den auf der Plattform 44 angeordneten Permanentmagneten 49 bzw. 48 erreicht, wobei eine sichere Haftung der Räder 33 an der Oberfläche 46 des zu kontrollierenden Erzeugnisses 43 und das Andrücken der Ultraschallwandler 1 an diese Oberfläche gewährleistet werden, sowie mit Hilfe der/sich selbsteinstellenden Räder 50 (Fig. 9). Die Räder 50 sind auf der Plattform 44 mit Hilfe von abgefederten Gelenken 51 befestigt und berühren die Oberfläche 45 des Erzeugnisses 43. Mittels der Gelenke 51 kann der Spielraum zwischen der Oberfläche 45 des zu kontrollierenden Erzeugnisses 43 und der Oberfläche der Magnete 48 und 49 geregelt werden, was für die Überwindung von möglichen Hindernissen z.B. von Schweißnahtwurzeln durch die Plattform 44 mit den darauf befestigten Magneten 48, 49 und den sich selbsteinstellenden Rädern 50 erforderlich ist.

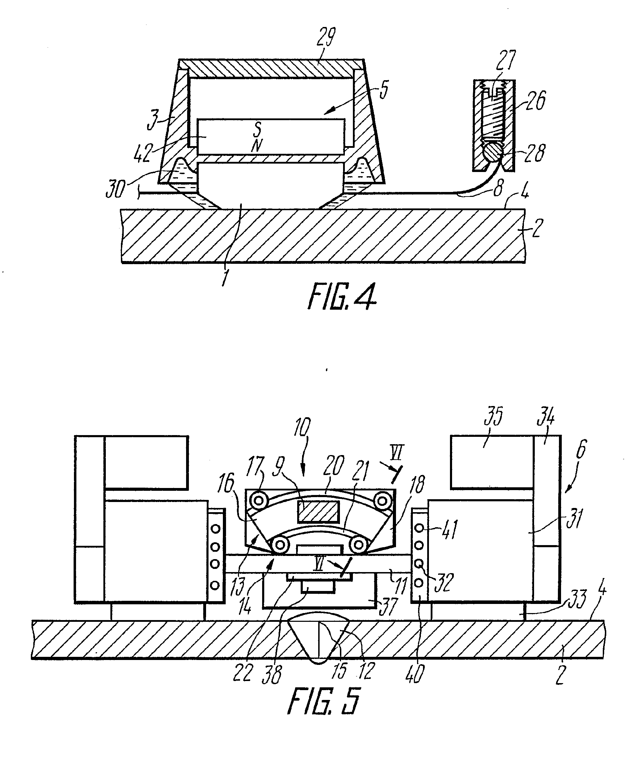

In Fig. 10 bis 14 ist eine Ausführungsvariante der Abtasteinrichtung gemäß der Erfindung dargestellt, die der Einrichtung nach Fig. 1 bis 6 ähnlich aufgebaut ist.

Der Unterschied liegt in der abweichenden Ausführung der/sich selbsteinstellenden Stützen 10 (Fig. 10-13). So ist der eine Teil 13 (Fig. 10 und 1 ) jeder Stütze 10 als Führungsschiene 52 mit zwei zylindrischen Arbeitsflächen 53 und 54 und einer diese verbindenden ebenen Arbeitsfläche 55 ausgeführt. Die Führungsschiene 52 (Fig. 10) ist mit dem Balken 9 mit Hilfe eines Schraubenpaares 24 fest verbunden.

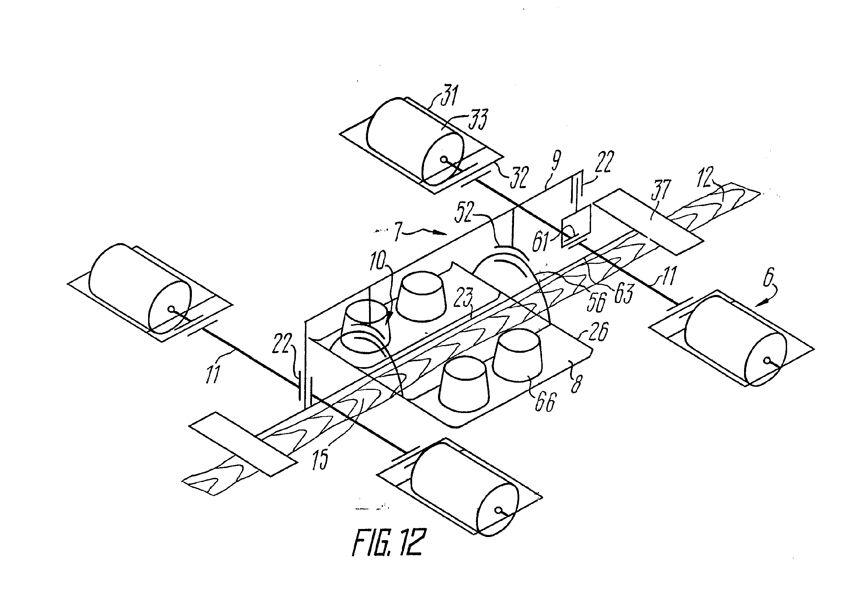

Der andere Teil 14 jeder Stütze 10 stellt einen mit den biegsamen Elementen 8 mechanisch verbundenen Einsatz 56 (Fig. 10, 12 und 13) mit zwei zylindrischen Arbeitsflächen 57 (Fig. 10) und 58 dar, die durch eine ebene Arbeitsfläche 59 miteinander verbunden sind, den zylindrischen Arbeitsflächen 53 und 54 kongruent sind und die letzteren berühren. Die Längsachsen aller zylindrischen Arbeitsflächen 53 (Fig. 12), 54, 57 und 58 fallen zusammen und dienen als gemeinsame Schwingungsachse 15 für die beiden/sich selbsteinstellenden Stützen 10.

In der Einrichtung nach Fig. 10 bis 14 können mehr als zwei sich selbsteinstellende Stützen 10 eingebaut werden. Dies hängt von der Anzahl der Ultraschallwandler ab.

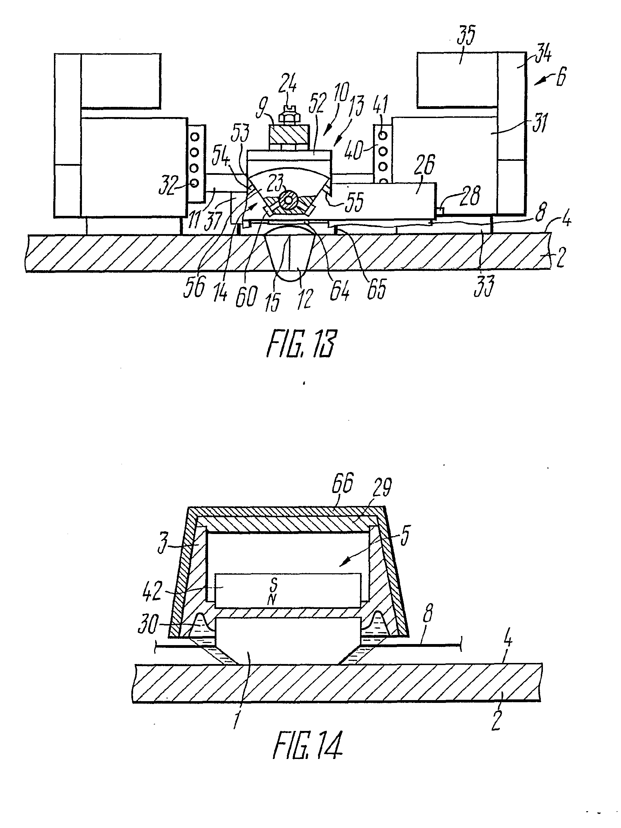

Die mechanische Verbindung des Einsatzes 56 (Fig. 10 und 13) mit den biegsamen Elementen 8 ist durch seine feste Verbindung mit der Stange 23 mit Hilfe von Schrauben 60 realisiert.

Die kinematische Verbindung des Balkens 9 (Fig. 12) mit den Schwengeln 11 erfolgt mittels der Gelenke 22 und 61.

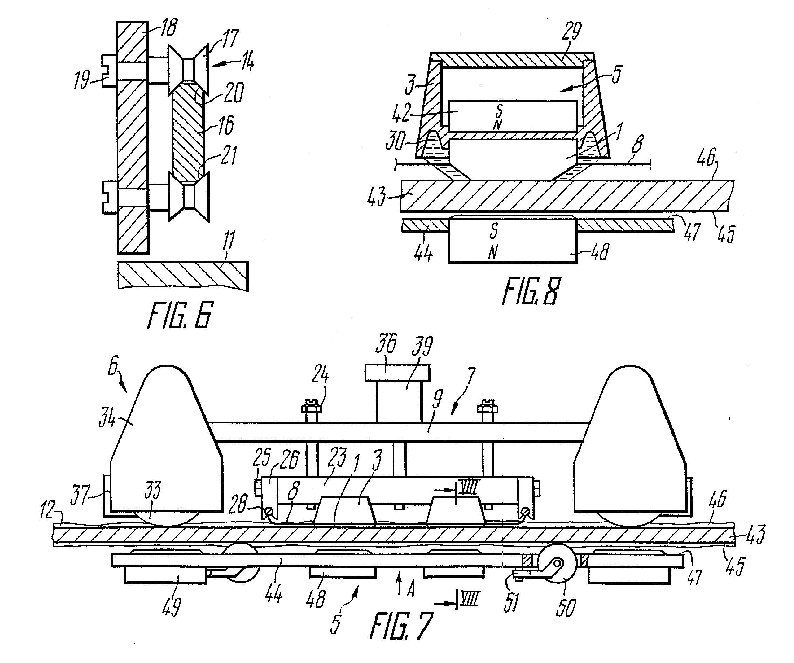

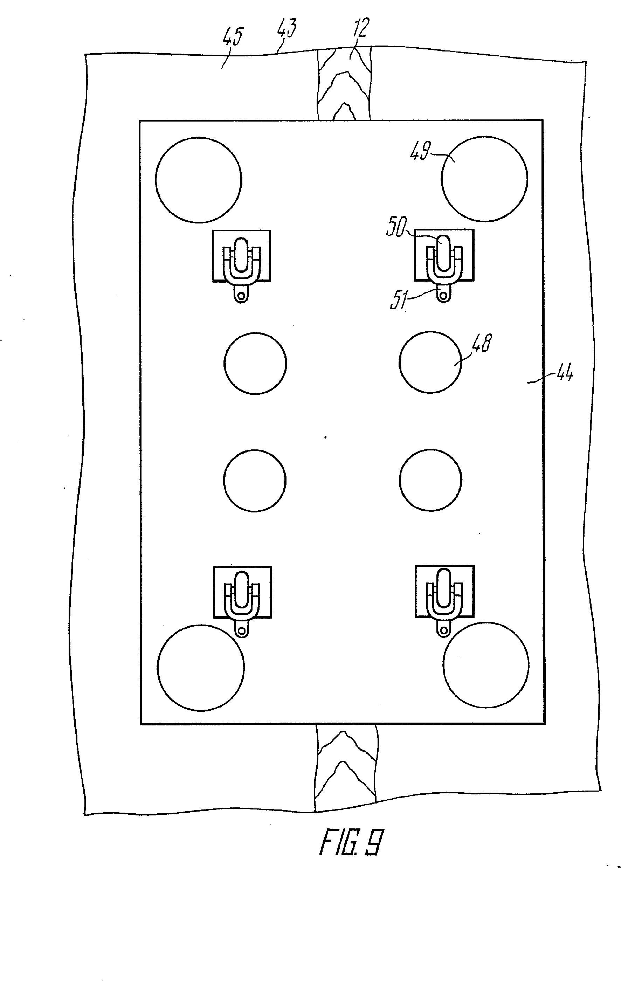

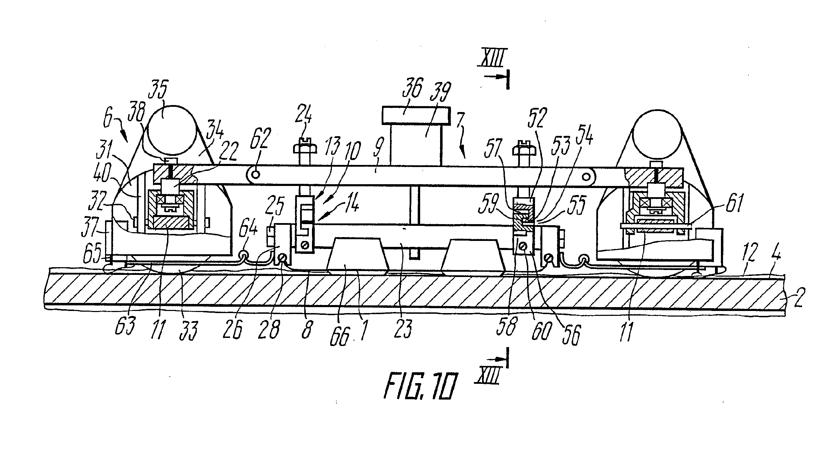

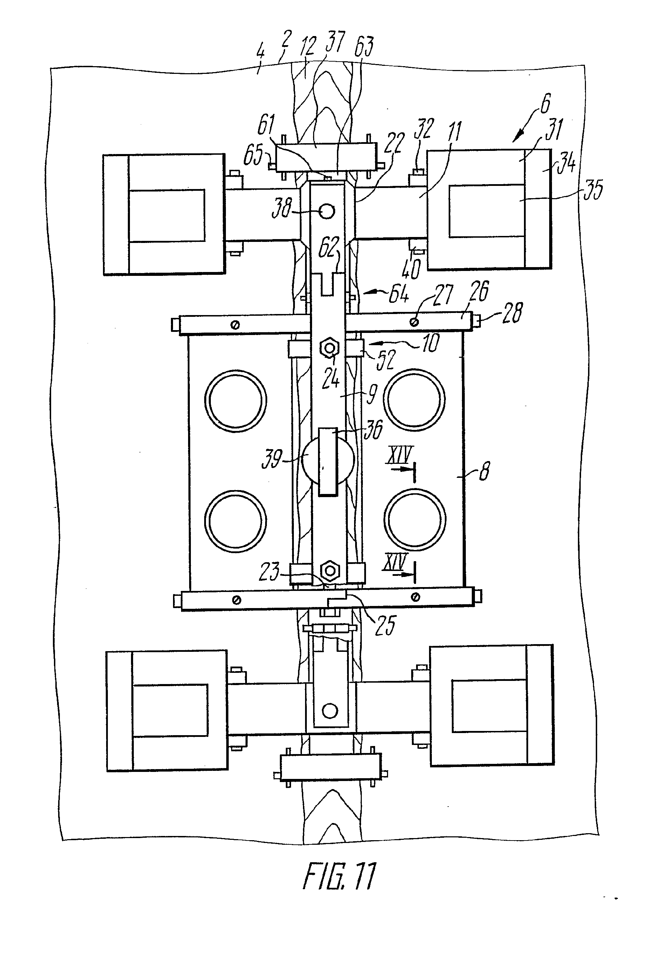

Bei dieser Variante der Einrichtung ist der Balken 9 mit Gelenken 62 (Fig. 10 und 11) versehen, was eine Erweiterung der Klasse der kontrollierbaren Oberflächen 4 und eine Vereinfachung der Feineinstellung der Einrichtung vor Beginn der Kontrolle ermöglicht.

Die zur Verfolgung der Schweißnaht 12 bestimmten Geber 37 sind auf Federn 63 befestigt, die mit Gelenken 64 versehen sind, wobei die Federn 63 an der Stange 23 mit Hilfe des Gelenks 25 befestigt sind. An diesen Schweißnaht-Verfolgungsgebern sind Endschalter 65 montiert, die zur Abschaltung der Geber 37 für die Zeit bestimmt sind, die für das Überfahren von vorkommenden und die Anzeige dieser Geber 37 beeinflussenden Hindernissen, z.B. von quer liegenden Schweißnähten, durch die Geber 37 erforderlich ist. Einer der Endschalter 65 hat zusätzlich die Aufgabe, die Bewegung der ganzen Einrichtung zu stoppen, wenn geometrische Abweichungen des zu kontrollierenden Erzeugnisses (gegebenenfalls die Abweichung der Höhe der Schweißnahtwurzel) von zulässigen Werten gemäß den technischen Forderungen an die Erzeugnisse 2 und an die Schweißnähte 12 erkannt werden.

Diese Variante der erfindungsgemäß ausgeführten Abtasteinrichtung ist vorzugsweise in den Fällen zu benutzen, wenn die Kontrolle an senkrechten und geneigten Oberflächen 4 der Erzeugnisse 2 unabhängig von der Bewegungsrichtung der Einrichtung erfolgen soll.

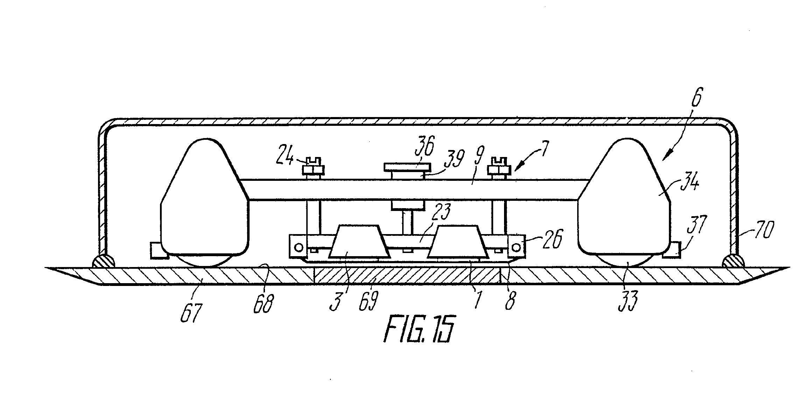

An den Gehäusen 3 sind ferromagnetische Schirme 66 (Fig. 14) befestigt, welche die gegenseitige Beeinflussung der von jedem Permanentmagnet 42 erzeugten magnetischen Streufelder abschwächen.

Bei der Lagerung und bei der Vorbereitung der erfindungsgemäß ausgeführten Einrichtung zur Arbeit benutzt man einen Untersatz 67 (Fig. 15), der eine mit dem Testmuster 69 gemeinsame Oberfläche 68 hat, sowie ein Gehäuse 70.

Die Abtasteinrichtung zur Ultraschallkontrolle von Erzeugnissen gemäß der Erfindung funktioniert im Prinzip wie folgt.

Vor Beginn der Kontrolle von aus ferromagnetischen Werkstoffen gefertigten Erzeugnissen 2 (Fig. 1) wird die erfindungsgemäß nach Fig. 1-6 ausgeführte Einrichtung auf die Oberfläche 68 (Fig. 15) des Untersatzes 67 mit einem Testmuster 69 gestellt. Die Krümmung der Oberfläche 68, die Dicke und der Werkstoff des Testmusters 69 müssen denen des zu kontrollierenden Erzeugnisses 2 identisch sein. Der Balken 9 wird dabei längs der Bewegungrichtung der Einrichtung entsprechend den Pfeilen B (Fig. 2) und C gerichtet. Mit Hilfe der Achsen 32 (Fig. 5) werden die Enden der Schwengel 11 in den mit den Öffnungen 41 versehenen Ösen 40 der Gehäuse 31 des Triebwerks 6 auf einer für das betreffende Erzeugnis 2 vorgegebenen Höhe befestigt. Mit Hilfe der Schraubenpaare 24 (Fig. 1) wird die Stange 23 am Balken 9 in einer Entfernung von der Oberfläche 68 befestigt, bei welcher die Stange 23 mit den darauf mittels der Gelenke 25 befestigten Haltern 26 sich ungehindert über die Raupenoberfläche der Schweißnaht 12 und über die Oberfläche 4 des Erzeugnisses 2 bewegen kann. Mittels der Spannelemente 28 (Fig. 4) zum Spannen der biegsamen Elemente 8 wird die Lage der Ultraschallwandler 1 in bezug auf das Testmuster 69 so geregelt, daß die Ultraschallwandler 1 den ganzen zu kontrollierenden Querschnitt des Erzeugnisses 2 (gegebenenfalls des ganze

Volumen der Schweißnaht 12 und der unmittelbar anliegenden Zonen) durchschallen, worauf die Enden der biegsamen Elemente 8 zusammen mit den Spannelementen 28 mit
den Feststellschrauben 27 befestigt werden.

Der Hohlraum 30 (Fig. 4) der Gehäuse 3 wird mit einer ferromagnetischen Flüssigkeit gefüllt, um einen stabilen akustischen Kontakt zwischen den Ultraschallwandlern 1 und der Oberfläche 68 (Fig. 15) des Testmusters
69 zu gewährleisten. Dann wird die Funktionsfähigkeit
aller Ultraschallwandler 1 geprüft.

Der Untersatz 67 mit der für die Kontrolle eingestellten Einrichtung nach Fig. 1-6 wird dicht an das zu
kontrollierende Erzeugnis 2 längs der Bewegungsrichtung
(der Schweißnaht 12) gebracht, und die zum Patent angemeldete Einrichtung fährt auf die Oberfläche 4 des zu
kontrollierenden Erzeugnisses 2.

Die Fortbewegung der Einrichtung auf der Oberfläche
4 des Erzeugnisses 2 erfolgt infolge der Rotation der
Magneträder 33 (Fig. 1, 5), die an der Oberfläche 4
sicher haften.

Falls mit der Einrichtung nach Fig. 1-6 Schweißnähte
12 kontrolliert werden, steuert man die Rotationsgeschwindigkeit der Räder 33, indem man die Anzeige der
Schweißnaht-Verfolgungsgeber 37 und der Drehwinkelgeber
38 benutzt.

Beim Auffahren eines der nach der Bewegungsrichtung
vorderen Rades 33 auf ein Hindernis, z.B. auf eine quer
liegende Schweißnaht, neigt sich der nach der Bewegungsrichtung vordere Schwengel 11 in bezug auf die Oberfläche
4, die gemeinsame Stützplatte 18 mit den Rollen 17 neigt
sich ebenfalls, da der Schwengel 11 und die gemeinsame
Stützplatte 18 miteinander mittels des Gelenkes 22 verbunden sind, aber das ringförmige Element 16 der nach
der Bewegungsrichtung vorderen/selbsteinstellenden Stütze
10 verschiebt sich dabei zwischen den Rollen 17, und die
Ultraschallwandler 1 werden in bezug auf die Schweißnaht 12 nicht verschoben, was      für die Ultraschallkontrolle der Schweißnaht 12 erforderlich ist. Bei weiterer Bewegung der Einrichtung wird dieses Hindernis (die quer liegende Schweißnaht) von den Ultraschallwandlern 1 überwunden, weil sie mit den biegsamen Elementen 8 fest verbunden sind und konstruktiv einen stoßfreien Übergang von der Befestigungsstelle der biegsamen Elemente 8 zur Oberfläche der Wandler 1 aufweisen, welche die Oberfläche 4 des Erzeugnisses 2 berührt.

Dann wird dieses Hindernis von dem nach der Bewegungsrichtung hinteren Rad 33 überwunden, das an derselben Seite wie das vordere Rad 33 liegt. Der hintere Schwengel 11 samt der darauf befestigten gemeinsamen Stützplatte 18 mit den Rollen 17 neigt sich, und das ringförmige Element 16, das mit seinen Arbeitsflächen 20 und 21 diese Rollen 17 berührt, verschiebt sich in bezug auf diese Rollen, und die Lage der Ultraschallwandler 1 bezüglich der Schweißnaht 12 wird nicht geändert, was für die sichere Fortbewegung der Ultraschallwandler 1 bei der Kontrolle der Schweißnaht 12 erforderlich ist.

Ähnliches geht auch bei der Überwindung der Hindernisse durch die anderen Magneträder 33 des Triebwerks 6 und durch die Ultraschallwandler 1 der Einrichtung nach Fig. 1 bis 6 vor sich.

Wenn die Ultraschallwandler 1 einen Defekt erkennen, wird die Defektstelle auf der Oberfläche der Schweißnaht z.B. mit Farbe markiert, wobei der Defekt gleichzeitig registriert wird.

Nach Beendigung der Kontrolle wird die Einrichtung auf ein Kommando des Gebers 36 gestoppt. Unter die Hinterräder 33 der Einrichtung schiebt man den Untersatz 67, die Einrichtung fährt darauf und hält. Die Einrichtung wird abgeschaltet, mit dem Gehäuse 70 abgedeckt und an die nächste zu kontrollierende Schweißnaht gebracht.

Wenn Erzeugnisse 2 mit horizontal orientierten Oberflächen 4 oder vertikale Schweißnähte 12 sowie Ringschweißnähte 12 horizontal liegender Rohrleitungen kontrolliert werden sollen, ist es zweckmäßig, in der Einrichtung nach Fig. 1-6 zwei Untersetzungsgetriebe 34 mit den Elektromotoren 35 von dem in der Bewegungsrichtung hinten liegenden Schwengel 11 zu entfernen und die mit dem letzteren verbundene Stützplatte 18 zu fixieren, damit der hintere Schwengel 11 in bezug auf die Stützplatte 18 nicht geschwenkt werden kann.

Vor Beginn der Kontrolle von aus nichtferromagnetischen Werkstoffen, z.B. aus Aluminium, hergestellten Erzeugnissen 43 (Fig. 7 und 8) wird die erfindungsgemäß ausgeführte Einrichtung auf dem Untersatz 67 (Fig. 15) mit einem Testmuster 69 angeordnet, wobei die Krümmung der Oberfläche 68 und der Werkstoff des Testmusters 69 denen des zu kontrollierenden Erzeugnisses 43 identisch sein sollen. Dann erfolgen alle Vorbereitungsvorgänge wie bei der Einstellung der Einrichtung nach Fig. 1-6 zur Durchführung der Kontrolle.

Von der Rückseite des Untersatzes 67 wird mit Hilfe der Gelenke 51 (Fig. 7) die Höhenlage der Plattform 44 geregelt, damit sie eventuelle Hindernisse wie z.B. Schweißnahtraupen überwinden kann.

Die für die Kontrolle eingestellte Einrichtung nach Fig. 7-9 wird auf dem Erzeugnis 43 (Fig. 8) so angeordnet, daß die Achsen der entsprechenden Magnete 42 und 48 zusammenfallen, worauf die Einrichtung eingeschaltet wird.

Weiter funktioniert die Einrichtung wie oben beschrieben.

Vor Beginn der Kontrolle von aus ferromagnetischen Werkstoffen gefertigten Erzeugnissen 2 wird die Einrichtung nach Fig. 10 bis 14 auf die Oberfläche 68 (Fig. 14) des Untersatzes 67 mit einem Testmuster 69 gestellt. Die Krümmung der Oberfläche 68, die Dicke und der Werkstoff des Testmusters 69 müssen denen des zu kontrollierenden Erzeugnisses 2 identisch sein. Dabei wird der Balken 9 längs der mit den Pfeilen B (Fig. 11) und C bezeichneten Bewegungsrichtung der Einrichtung angeordnet.

Mit Hilfe der Achsen 32 (Fig. 10 und 13) befestigt man die Enden der Schwengel 11 in den mit Öffnungen 41 versehenen Ösen 40 von Gehäusen 31 des Triebwerks 6 auf einer vorgegebenen Höhe, und mittels der Schrauben 60 und der Schraubenpaare 24 wird die Höhe der/sich selbsteinstellenden Stützen 10 eingestellt, bei der die gemeinsame Achse 15 auf der Oberfläche 68 (Fig. 15) liegt. Dabei werden die Stange 23 (Fig. 10 und 13), die Halter 26 der biegsamen Elemente 8, die Schweißnaht-Verfolgungsgeber 37, die Federn 63 und die Gelenke 64 auf einer Höhe angeordnet, bei der die Überwindung der von den technischen Bedingungen zugelassenen Hindernisse auf dem Erzeugnis 2, z.B. der an die zu kontrollierende Schweißnaht 12 anliegenden Schweißnahtraupen möglich wird.

Die Halter 26 und die Federn 63 befestigt man mit Hilfe des Gelenkes 25, und mittels der zum Spannen der biegsamen Elemente 8 bestimmten Spannelemente 28 wird die Lage der Ultraschallwandler 1 bezüglich des Testmusters 69 so geregelt, daß die Ultraschallwandler 1 das ganze zu kontrollierende Volumen des Erzeugnisses 2 (gegebenenfalls das ganze Volumen der Schweißnaht 12 und der an sie anliegenden Zonen) durchschallen, worauf man die Enden der gespannten biegsamen Elemente 8 zusammen mit den Spannelementen 28 mittels der Feststellschrauben 27 befestigt.

Dann wird die Funktionsfähigkeit aller Geber 36, 37 und 38 sowie des Defektmarkierers 39 geprüft und die Arbeit der Endschalter 65 geregelt.

Der Hohlraum 30 (Fig. 14) der Gehäuse 3 wird mit ferromagnetischer Flüssigkeit gefüllt, um einen stabilen akustischen Kontakt zwischen den Ultraschallwandlern 1 und der Oberfläche 68 des Testmusters 69 zu gewährleisten, worauf man die Funktionsfähigkeit aller Ultraschallwandler 1 prüft. Den Untersatz 67 mit der für die Kontrolle eingestellten Einrichtung nach Fig. 10-14 bringt man dicht an das zu kontrollierende Erzeugnis 2, und die gemäß der Erfindung ausgeführte Einrichtung fährt auf die Oberfläche 4 des zu kontrollierenden Erzeugnisses 2.

Die Fortbewegung der Einrichtung auf der Oberfläche 4 des zu kontrollierenden Erzeugnisses 2 erfolgt infolge der Rotation der Magneträder 33, die an der Oberfläche 4 sicher haften. Die Drehbewegung der Ausgangswellen der Elektromotoren 35 wird über die Untersetzungsgetriebe 34 zu den Magneträdern 33 übertragen, die an den Ausgangswellen der Untersetzungsgetriebe 34 befestigt sind. Bei Änderung der Drehgeschwindigkeit der Elektromotoren 35 ändert sich auch die Lage der Schwengel 11 (Fig. 12) in bezug auf den Balken 9 infolge der vorhandenen Gelenke 22 und 61. Mit Berücksichtigung der Signale der Schweißnaht-Verfolgungsgeber 37, der Drehwinkelgeber 38, des Signalgebers 36 für Beginn und Ende der Kontrolle und des Entfernungsgebers ändert man die Drehgeschwindigkeit der Räder 33, wobei die Einrichtung während ihrer Bewegung auf der Oberfläche 4 des zu kontrollierenden Erzeugnisses 2 in die für die Kontrolle erforderliche Lage gebracht wird.

Wenn die Einrichtung dabei auf ein Hindernis (z.B. auf eine Schweißnaht) stößt, dessen Höhe gemäß den technischen Forderungen an das betreffende Erzeugnis 2 unzulässig ist, erzeugt der Endschalter 65, der an dem nach der Bewegungsrichtung vorderen Schweißnaht-Verfolgungsgeber 37 angeordnet ist, ein Signal zur Abschaltung der Einrichtung.

Wenn sich die Ultraschallwandler 1 zu irgend einer Seite von der Schweißnaht 12 verschieben, bewirkt das Signal des Gebers 37 die Bremsung der Ausgangswelle des Elektromotors 35. Dabei werden die Schwengel 11 um die Gelenke 22 geschwenkt, und die Einrichtung bewegt sich zur Schweißnaht 12.

Bei der Kontrolle von horizontal liegenden Schweißnähten an vertikalen oder geneigten Oberflächen verschieben sich die Hinterräder 33 unter Einwirkung des Gewichts der ganzen Einrichtung                    von der zu kontrollierenden Schweißnaht 12. Dabei wird der Nahtverfolgungsgeber 37 ebenfalls verschoben und liefert ein
Kommando an einen der Elektromotoren 35, der seine Umdrehungszahl reduziert und die Drehgeschwindigkeit des
Rades 33 herabsetzt. Infolgedessen wird der Schwengel 11
der nach der Bewegungsrichtung hinteren Räder 33 um das
Gelenk 22 gedreht und wieder auf die Schweißnahtachse
zurückgeführt. Also nimmt die Einrichtung die für die
Kontrolle und für die Bewegung auf dem Erzeugnis 2 erforderliche Lage ein. Mit Hilfe des Signalgebers 36 für
den Beginn und das Ende der Kontrolle werden die Ultraschallwandler 1 eingeschaltet und es erfolgt die Durchschallung des ganzen zu kontrollierenden Querschnitts.

Falls ein unzulässiger Defekt erkannt wird, macht
der Defektmarkierer 39 auf der Oberfläche 4 des zu kontrollierenden Erzeugnisses 2 eine Marke z.B. mit Farbe.
Nach Beendigung der Kontrolle wird die Einrichtung nach
einem Signal des Gebers 36 gestoppt. Unter die Einrichtung schiebt man den Untersatz 67 und die Einrichtung
fährt darauf.

Wenn bei der Bewegung das nach der Bewegungsrichtung vordere Rad 33 ein für das betreffende Erzeugnis zulässiges Hindernis trifft und darauf mit dem  Außenrand
des Rades 33
/fährt, hebt sich dieser Rand an der Achse 32, ohne den
Balken 9 und die Hinterräder 33 zu beeinflussen.

Falls Hindernisse vorkommen, die das ganze Rad 33
heben, dreht sich der Schwengel 11 des Vorderrades 33 und
hebt den Balken 9, seine Stütze 10 und die Stütze 10
der Hinterräder 33, die sich von der Oberfläche 4 des
zu kontrollierenden Erzeugnisses 2 nicht trennen, da der
Schwengel 11 der Hinterräder 33 im Gelenk 61 gedreht
wird. Dabei wird die Lage der von den Magneten 42 an die Oberfläche 4 des Erzeugnisses 2 gedrückten Ultraschallwandler 1 nicht geändert, da der Balken 9 mit der Führungsschiene 52 bezüglich des Einsatzes 56 geschwenkt wird, und das biegsame Element 8 an der Seite der Hinterräder 33 gespannt wird, wobei es den Hub der Stange 23 mit den Haltern 26 kompensiert.

Beim Auffahren der Einrichtung auf eine Schweißnaht, welche die zu kontrollierende Schweißnaht 12 schneidet, wird der Endschalter 65 des in der Bewegungsrichtung vorderen Gebers 37 gedreht und liefert ein Signal zur Abschaltung des Gebers 37 für die Zeit seiner Bewegung über der Schweißnaht, wodurch eine Fehlanzeige einer Änderung in der Bewegungsrichtung der Einrichtung verhindert wird. Das Signal des Endschalters 65 bewirkt die Abschaltung der an derselben Seite von der zu kontrollierenden Naht 12 liegenden Ultraschallwandler 1 bei ihrem Überfahren der gekreuzten Schweißnaht.

Weiter arbeitet die Einrichtung nach Fig. 10 bis 14 ähnlich der Einrichtung nach Fig. 1 bis 6.

Die zum Patent angemeldete Abtasteinrichtung zur Ultraschallkontrolle von Erzeugnissen gewährleistet eine höhere Zuverlässigkeit und Glaubwürdigkeit der Kontrolle und hat kleinere Abmessungen, ein geringeres Gewicht und einen einfacheren Aufbau der Aufhängevorrichtung. Sie ermöglicht die Kontrolle einer erweiterten Klasse von Erzeugnissen sowohl aus ferromagnetischen als auch aus nichtferromagnetischen Werkstoffen mit verschiedener Krümmung der Oberfläche und bei verschiedener räumlicher Lage der Einrichtung.

Die feste Verbindung der Ultraschallwandler 1 mit den in unmittelbarer Nähe der Erzeugnisoberfläche liegenden biegsamen Elementen 8 sowie der Aufhängevorrichtung gibt die zusätzliche Möglichkeit, Hindernisse auf der Oberfläche des zu kontrollierenden Erzeugnisses z.B. in der Art von Schweißnahtraupen oder Metallspritzern nach dem Schweißen unabhängig von der Krümmung der Erzeugnisoberfläche zu überwinden. Die Permanentmagnete der Andrückvorrichtung der erfindungsgemäß ausgeführten Einrichtung gestatten die Anwendung einer ferromagnetischen Flüssigkeit, um einen stabilen akustischen Kontakt zwischen den Ultraschallwandlern und der Oberfläche des zu kontrollierenden Erzeugnisses bei verschiedener räumlicher Lage und bei einer Umgebungstemperatur von -50°C bis +50°C zu erzielen.

Beispielsweise wird für die im Gelände erfolgende Kontrolle von Ringschweißnähten der Rohrleitungen von 1420 mm Durchmesser mit einer Rohrwanddicke bis 40 mm eine Abtasteinrichtung gemäß der Erfindung mit einem Gewicht bis 8 kg benutzt, wobei die Einrichtung von einer Person bedient wird, und die für die Kontrolle einer Stoßverbindung erforderliche Zeit weniger als 4 min beträgt.

## Gewerbliche Anwendbarkeit

Die Erfindung kann in verschiedenen Industriezweigen wie z.B. im Maschinenbau, im Schiffsbau und Kernkraftmaschinenbau, beim Bau von Kesseln, Erdgas- und Erdölleitungen zur Ultraschallkontrolle von Schweißnähten und des Grundwerkstoffes ferromagnetischer und nichtferromagnetischer Erzeugnisse sowohl mit ebener als auch mit krummer Oberfläche bei verschiedener räumlicher Lage der Abtasteinrichtung benutzt werden, wobei die Überwindung von Hindernissen durch die Einrichtung in der Art von Metallspritzern nach dem Schweißen oder von Schweißnahtraupen bei verlagerten Schweißkanten sowie die automatische Verfolgung der Schweißnahtachse oder die automatische Bewegung nach einer vorgegebenen Bewegungsbahn gewährleistet werden.

PATENTANSPRÜCHE

1. Abtasteinrichtung zur Ultraschallkontrolle von Erzeugnissen mit Ultraschallwandlern (1), die am Triebwerk (6) der Abtasteinrichtung mittels einer Aufhängevorrichtung (7) befestigt sind, an das zu kontrollierende Erzeugnis (2) angelegt und an seine Oberfläche (4) mittels einer Andrückvorrichtung (5) gedrückt werden, d a d u r c h   g e k e n n z e i c h n e t , daß die Aufhängevorrichtung (7) für die Aufhängung der Ultraschallwandler (1) auf dem Triebwerk (6) der Abtasteinrichtung biegsame Elemente (8) enthält, die über der Oberfläche (4) des zu kontrollierenden Erzeugnisses (2) längs einer vom Triebwerk (6) festgelegten Bewegungsrichtung der Einrichtung angeordnet und an denen die Ultraschallwandler (1) starr befestigt sind, sowie einen Balken (9) aufweist, der über den biegsamen Elementen (8) längs der Bewegungsrichtung der Einrichtung liegt und mit den biegsamen Elementen (8) mechanisch verbunden ist, und wenigstens zwei sich selbsteinstellende Stützen (10) besitzt, bei denen ein Teil (13) am Balken (9) und der andere Teil (14) in bezug auf den ersten Teil (13) so angeordnet ist, daß eine gegenseitige Verschiebung der beiden Teile (13, 14) in bezug auf die für die sich selbsteinstellenden Stützen (10) gemeinsame und in unmittelbar Nähe der Oberfläche (4) des zu kontrollierenden Erzeugnisses (2) liegende Schwingungsachse (15) erfolgt, sowie mit zwei Schwengeln (11) versehen ist, die mit dem Balken (9) und dem Triebwerk (6) mechanisch verbunden sind.

2. Abtasteinrichtung nach Anspruch 1, d a d u r c h   g e k e n n z e i c h n e t , daß der eine Teil (13) jeder sich selbsteinstellenden Stütze (10) in Form eines an einem Ende des Balkens (9) befestigten ringteilförmigen Elementes (16) ausgeführt ist, dessen Längsachse als gemeinsame Schwingungsachse (15) für die beiden selbsteinstellenden Stützen (10) dient, und der andere Teil (14) aus wenigstens drei Rollen (17) hergestellt ist, die auf einer gemeinsamen Stützplatte (18) befestigt sind und mit den Arbeitsflächen (20, 21) des ringteilförmigen Elements (16) in Berührung stehen, wobei sie über das ringteilförmige Element (16) und die Stützplatte (18) einen der Schwengel (11) mit dem Balken (9) verbinden.

3. Abtasteinrichtung nach Anspruch 1, d a - d u r c h  g e k e n n z e i c h n e t, daß der eine Teil (13) jeder selbsteinstellenden Stütze (10) in Form von einer mit dem Balken (9) fest verbundenen Führungsschiene (52) mit zwei zylindrischen Arbeitsflächen (53, 54) und einer die letzteren verbindenden ebenen Arbeitsfläche (55) ausgeführt ist, und der andere Teil (14) als ein mit den biegsamen Elementen (8) mechanisch verbundener Einsatz (56) mit zwei zylindrischen Arbeitsflächen (57, 58) und einer diese verbindenden Arbeitsfläche (59) realisiert ist, wobei die zweitgenannten zylindrischen Arbeitsflächen (57, 58) mit den erstgenannten zylindrischen Arbeitsflächen (53 bzw. 54) kongruent sind und sie berühren, während die Längsachsen aller zylindrischen Arbeitsflächen (53, 54, 57, 58) koinzidieren und als gemeinsame Schwingungsachse (15) sich für die beiden selbsteinstellenden Stützen (10) dienen.

4. Abtasteinrichtung nach einem der Ansprüche 1 bis 2 3, d a d u r c h  g e k e n n z e i c h n e t, daß im Falle der Kontrolle von Erzeugnissen (2) aus ferromagnetischen Werkstoffen die für das Andrücken der Ultraschallwandler (1) an die Oberfläche (4) des zu kontrollierenden Erzeugnisse (2) bestimmte Andrückvorrichtung Hauptpermanentmagnete (42) enthält, die unmittelbar über den entsprechenden auf den biegsamen Elementen (8) befestigten Ultraschallwandlern (1) eingebaut sind.

5. Abtasteinrichtung nach einem der Ansprüche 1 bis 2 3, d a d u r c h  g e k e n n z e i c h n e t, daß im Falle der Kontrolle von Erzeugnissen (43) aus nichtferromagnetischen Werkstoffen die für das Andrücken der Ultraschallwandler (1) an die Oberfläche (46) des zu kontrollierenden Erzeugnisses (43) bestimmte Andrückvorrichtung (5) eine Plattform (44) enthält, die im Bereich der zur Kontrolloberfläche (46) des Erzeugnisses (43) entgegengesetzten Fläche (45) angeordnet ist und für die automatische Wiederholung der Bewegungsbahn der Abtasteinrichtung hergerichtet ist, sowie zusätzliche Permanentmagnete (48) aufweist, die auf der Plattform (44) mit den zu den Polen (N) der Hauptpermanentmagnete (42) ungleichnamigen Polen (S) symmetrisch zu den letzteren angeordnet sind.

6. Abtasteinrichtung nach Anspruch 2, d a d u r c h g e k e n n z e i c h n e t, daß die für das Andrücken der Ultraschallwandler (1) an die Oberfläche (4, 46) des zu kontrollierenden Erzeugnisses (2, 43) bestimmte Andrückvorrichtung (5) Hauptpermanentmagnete (42) enthält, die unmittelbar über den entsprechenden Ultraschallwandlern auf den biegsamen Elementen (8) befestigt sind und die Kontrolle von Erzeugnissen (2) aus ferromagnetischem Werkstoff ermöglichen, sowie eine Plattform (44) aufweist, die im Bereich der zur Kontrolloberfläche (46) entgegengesetzten Fläche (45) des zu kontrollierenden Erzeugnisses (43) liegt und für die automatische Wiederholung der Bewegungsbahn der Abtasteinrichtung hergerichtet ist, und die Andrückvorrichtung (5) zusätzliche Permanentmagnete (48) enthält, die auf der Plattform (44) mit den zu den Polen (N) der Hauptpermanentmagnete (42) ungleichnamigen Polen (S) symmetrisch zu den letzteren eingebaut sind und die Kontrolle von Erzeugnissen (43) aus nichtferromagnetischen Werkstoffen ermöglichen.

7. Abtasteinrichtung nach Anspruch 3, d a d u r c h g e k e n n z e i c h n e t, daß die zum Andrücken der Ultraschallwandler (1) an die Oberfläche (4, 46) des zu kontrollierenden Erzeugnisses (2, 43) bestimmte Andrückvorrichtung (5) Hauptpermanentmagnete (42) enthält, die unmittelbar über den entsprechenden Ultraschallwandlern auf den biegsamen Elementen (8) befestigt sind und die Kontrolle von Erzeugnissen (2) aus ferromagnetischem Werkstoff ermöglichen, sowie eine Plattform (44) aufweist, die im Bereich der zurKontrolloberfläche (46) entgegengesetzten Fläche (45) des zu kontrollierenden Erzeugnisses (43) liegt und für die automatische Wiederholung der Bewegungsbahn der Abtasteinrichtung hergerichtet ist, und die Andrückvorrichtung (5) zusätzliche Permanentmagnete (48) enthält, die auf der Plattform (44) mit den zu den Polen (N) der Hauptpermanentmagnete (42) ungleichnamigen Polen (S) symmetrisch zu den letzteren eingebaut sind und die Kontrolle von Erzeugnissen (43) aus nichtferromagnetischen Werkstoffen ermöglichen.

FIG. 1

FIG. 2

FIG. 3

FIG. 4

FIG. 5

FIG. 6

FIG. 8

FIG. 7

0346473

FIG. 9

0346473

**FIG.10**

FIG. 11

FIG. 12

0346473

FIG. 13

FIG. 14

FIG. 15

0346473

# INTERNATIONAL SEARCH REPORT

International Application No PCT/SU 88/00048

**I. CLASSIFICATION OF SUBJECT MATTER** (if several classification symbols apply, indicate all) [6]

According to International Patent Classification (IPC) or to both National Classification and IPC

$IPC^4$ – G 01 N 29/04

**II. FIELDS SEARCHED**

| Minimum Documentation Searched [7] | |
|---|---|
| Classification System | Classification Symbols |
| $IPC^4$ | G01N 29/00, 29/04 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | US, A, 4010636, (General Electric Company), 8 March 1977 (08.03.77), see claims 1-7, figure 4 | 1,2 |
| A | US, A, 3504534, (Republic Steel Corporation), 7 April 1970 (07.04.70), see claims 1-13, figures 1-4 | 1,3 |
| A | GB, A, 1343989, (STAHLWERKE PEINE-SALZGITTER AG), 16 January 1974 (16.01.74), see claims 1-7, figures 2-6 | 1 |
| A | GB, A, 1415389, (NIPPON STEEL CORPORATION), 26 November 1975 (26.11.75), see claims 1-5, figure 1 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 29 June 1988 (29.06.89) | 8 August 1988 (08.08.88) |
| International Searching Authority | Signature of Authorized Officer |
| ISA/SU | |

Form PCT/ISA/210 (second sheet) (January 1985)